# EUROPEAN PATENT APPLICATION

(11) **EP 4 345 645 A1**
(43) Date of publication of application: **03.04.2024**
(21) Application number: 22913488.7
(22) Date of filing: 07.09.2022
(51) Int. Cl.: G06F 16/332

(54) **USER QUESTION LABELING METHOD AND DEVICE**

(30) Priority: 31.12.2021 CN 202111678653
(71) Applicant: Mashang Consumer Finance Co., Ltd., Chongqing 401121 (CN)
(72) Inventor: GENG, Fuming, Chongqing 401121 (CN); WU, Haiying, Chongqing 401121 (CN); JIANG, Ning, Chongqing 401121 (CN)
(74) Representative: Elzaburu S.L.P.
(86) International application number: PCT/CN2022/117665
(87) International publication number: WO 2023/124215

(57) **Abstract**

Embodiments of the present application provide a user question labeling method and apparatus. By obtaining dialogue data generated by a manual customer service system, determining a target quick response statement corresponding to a target raised question, and then determining, in combination with a correspondence between a preset quick response statement and a user intention label, a target intention label corresponding to the target quick response statement, so as to obtain a correspondence between the target raised question and the target intention label, labeling user intention for a user question is thus achieved and then a generated user intention recognition sample set is applied to a user intention recognition model in an intelligent customer service system. Not only can the labeling efficiency of the user question be improved, so that a large number of user intention recognition samples are provided for the intelligent customer service system, but also the coverage rate of the user questions that cannot be recognized by the intelligent customer service system included in the user intention recognition sample set can be improved. Therefore, recognition accuracy of the user intention recognition model is improved, and service quality of the intelligent customer service system is thus ensured.

## Description

This application claims priority to Chinese Patent Application No. 202111678653.1, filed on December 31, 2021, and entitled "User Question Labeling Method and Apparatus", the disclosure of which is hereby incorporated by reference in its entirety.

### TECHNICAL FIELD

The present application relates to the field of artificial intelligence technology and, in particular, to a user question labeling method and apparatus.

### BACKGROUND

At present, with the rapid development of machine learning technology, machine learning has been widely applied in many fields. For example, the machine learning technology can be applied to the field of intelligent robots, by collecting real business scenario data to train a machine learning model used by an intelligent robot, the intelligent robot is enabled to provide high-quality services to users.

For customer service scenarios, an intelligent customer service can be used to assist a manual customer service to work, thereby solving the problem of human resource shortage. However, at present, the ability of the intelligent customer service to handle business is limited, and sometimes true intention of the users cannot be identified from their questions, resulting in poor user experience. Therefore, it is necessary to provide a technical solution that can improve recognition accuracy of a user intention recognition model used by the intelligent customer service.

### SUMMARY

Objectives of embodiments of the present application are to provide a user question labeling method and apparatus.

In a first aspect, an embodiment of the present application provides a user question labeling method, where the method includes:
obtaining a target raised question submitted to a manual customer service system and a target quick response statement corresponding to the target raised question, where the target quick response statement includes: at least one quick response statement in a preset quick statement set, and the quick response statement is a response statement preset in the manual customer service system for quick response to a user question;
determining a target intention label corresponding to the target quick response statement based on a preset first correspondence, where the first correspondence includes a correspondence between the target quick response statement and the target intention label pre-stored in the manual customer service system;
labeling the target raised question and generating a user intention recognition sample set based on the target intention label, where the user intention recognition sample set is used to train a user intention recognition model used by an intelligent customer service system.

In a second aspect, an embodiment of the present application provides a user question labeling apparatus, where the apparatus includes:
a first acquisition module, configured to obtain a target raised question submitted to a manual customer service system and a target quick response statement corresponding to the target raised question, where the target quick response statement includes: at least one quick response statement in a preset quick statement set, and the quick response statement is a response statement preset in the manual customer service system for quick response to a user question;
a first determination module, configured to determine a target intention label corresponding to the target quick response statement based on a preset first correspondence, where the first correspondence includes a correspondence between the target quick response statement and the target intention label pre-stored in the manual customer service system;
a first generation module, configured to label the target raised question and generating a user intention recognition sample set based on the target intention label, where the user intention recognition sample set is used to train a user intention recognition model used by an intelligent customer service system.

In a third aspect, an embodiment of the present application provides a user question labeling device, where the device includes:
a processor; and
a memory arranged to store computer executable instructions, where the executable instructions are configured to be executed by the processor and include the steps for executing the method according to the first aspect.

In a fourth aspect, an embodiment of the present application provides a storage medium, where the storage medium is used to store computer executable instructions which cause a computer to execute the steps of the method according to the first aspect.

### BRIEF DESCRIPTION OF DRAWINGS

In order to provide a clearer explanation of embodiments of the present application or technical solutions in the prior art, the accompanying drawings required for the description of the embodiments or the prior art will be briefly introduced below. Obviously, the accompanying drawings described below only correspond to some of the embodiments recorded in the present application. For those of ordinary skill in the art, without paying any creative effort, other drawings can also be obtained based on these accompanying drawings.
FIG. 1 is a first flowchart of a user question labeling method provided in an embodiment of the present application.
FIG. 2 is a second flowchart of a user question labeling method provided in an embodiment of the present application.
FIG. 3 is a third flowchart of a user question labeling method provided in an embodiment of the present application.
FIG. 4 is a schematic diagram of a quick statement setting interface of an agent client in a user question labeling method provided in an embodiment of the present application.
FIG. 5 is a schematic diagram of a training process of a user intention recognition model in a user question labeling method provided in an embodiment of the present application.
FIG. 6 is a schematic diagram of an application scenario of a user question labeling method provided in an embodiment of the present application.
FIG. 7 is a schematic diagram of module composition of a user question labeling apparatus provided in an embodiment of the present application.
FIG. 8 is a schematic structural diagram of a user question labeling device provided in an embodiment of the present application.

### DESCRIPTION OF EMBODIMENTS

In order to enable those skilled in the art to better understand technical solutions of the present application, the following will provide a clear and complete description for the technical solutions in the embodiments of the present application in conjunction with the accompanying drawings in the embodiments of the present application. Obviously, the described embodiments are only a part of the embodiments of the present application, not all of them. Based on the embodiments of the present application, all other embodiments obtained by those of ordinary skill in the art without creative effort shall fall within the protection scope of the present application.

It should be noted that in the absence of conflicts, the embodiments and the features in the embodiments of the present application can be combined with each other. The following will refer to the accompanying drawings to provide a detailed description of the embodiments of the present application.

The embodiments of the present application provide a user question labeling method and apparatus. By obtaining dialogue data generated by a manual customer service system, determining a target quick response statement corresponding to a target raised question, and then determining, in combination with a correspondence between a preset quick response statement and a user intention label, a target intention label corresponding to the target quick response statement, so as to obtain a correspondence between the target raised question and the target intention label, labeling user intention for a user question is thus achieved and then a generated user intention recognition sample set is applied to a user intention recognition model in an intelligent customer service system. That is, by fully utilizing the dialogue data generated in the manual customer service system, a user intention training sample set required in the intelligent customer service system is automatically generated, and the real business flow of the intelligent customer service system is linked closely with the user intention recognition needs of the intelligent customer service system. In this way, not only can the labeling efficiency of a user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

It should be noted that in a customer service scenario, for the situation that the intelligent customer service system is used to provide service to the users, a large number of user intention recognition samples need to be collected in advance to train the user intention recognition model used by the intelligent customer service system. In the existing process of collecting the user intention recognition samples for training the user intention recognition model, the intelligent customer service system is usually required to record user questions that cannot be accurately responded, and then intention labeling for these user questions will be manually performed. And considering that in some cases, users may directly choose the manual customer service system, resulting in the intelligent customer service system not being able to recognize these user questions. Thus, it may result in missing out some user questions that the intelligent customer service system cannot accurately respond to when manually labeling for the user questions. Therefore, there may be problems with low acquiring efficiency and limited acquiring quantity of the user intention recognition samples. This further leads to a problem of low recognition accuracy of the trained user intention recognition model, and thus, it is difficult for the intelligent customer service system to accurately recognize the true intention of the user-raised question when providing services for users, resulting in a poor user experience. Based on the above problem, in the technical solution of the present application, through fully utilizing the dialogue data generated in the manual customer service system (which can include the correspondence between the user-raised question and the customer service response statement), and combining the correspondence between the preset quick response statements and the user intention labels, the user intention training sample set required in the intelligent customer service system is automatically generated, and the real business flow of the intelligent customer service system is linked closely with the user intention recognition needs of the intelligent customer service system. In this way, not only can the labeling efficiency of a user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

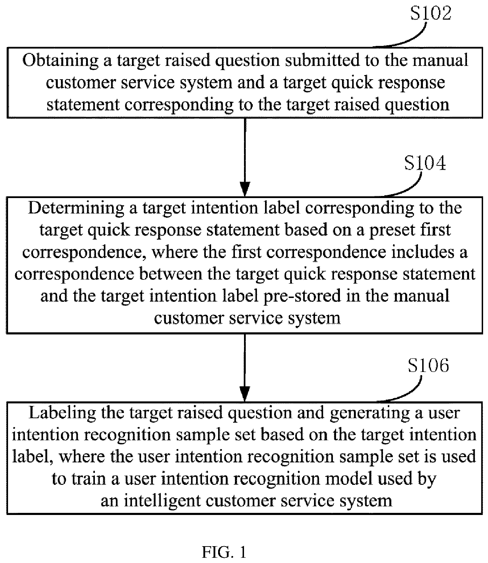

FIG. 1 is a first flowchart of a user question labeling method provided in an embodiment of the present application. The method in FIG. 1 is about a process of automatically obtaining a user intention recognition sample set from the manual customer service system, based on the real business flow generated by the manual customer service system. The user intention recognition sample set is used to train the user intention recognition model used by the intelligent customer service system. The labeling method is applied to a backend server for labeling user questions. The backend server can be a first server of the manual customer service system or a second server in communication connection with the first server of the manual customer service system. As shown in FIG. 1, the method at least includes the following steps.

S 102, obtaining a target raised question submitted to the manual customer service system and a target quick response statement corresponding to the target raised question.

The target quick response statement includes: at least one quick response statement in a preset quick statement set, and the quick response statement is a response statement preset in the manual customer service system for quick response to a user question. The above target quick response statement can be a quick response statement selected by the target agent from the preset quick statement set and for a direct response. Correspondingly, the quick response statement of the target agent to the target raised question of the user can be determined as the target quick response statement. Specifically, the target agent can select the target quick response statement that matches the target raised question from preset multiple quick response statements. The target agent client used by the target agent sends the target quick response statement to the server of the manual customer service system after detecting a selection and input operation for the target quick response statement. Correspondingly, the server sends the target quick response statement to the client submitting the target raised question, thereby achieving a one click response to the target raised question of the user, and eliminating the step for manual input of the response statement by the agent. In the specific implementation, the target agent's selection and input operation for the target quick response statement can be a click operation on the target quick response statement through a mouse, a click operation on the target quick response statement on a touch screen, or a input operation through a quick key, that is, a correspondence between the quick key and the quick response statement are preset. In this way, the agent can quickly call up a corresponding quick response statement by inputting the corresponding quick key through the agent client.

The above target quick response statement can also be a quick response statement from the preset quick response statement set through automatic matching based on a regular response statement of the target agent to the target raised question of the user (i.e., a response statement manually input by the customer service). Specifically, the regular response statement of the target agent can be matched with each quick response statement in the preset quick response statement set, and the target quick response statement corresponding to the target raised question is determined based on the quick response statement whose similarity meets a preset condition.

For example, the above preset condition can be that the similarity is greater than a preset threshold. Correspondingly, at least one quick response statement that matches is obtained from the preset quick statement set and determined as a recommended quick response statement. The similarity between the at least one quick response statement and the regular response statement of the target agent to the target raised question of the user is greater than the preset threshold, and a quick response statement selected by the target agent from the above recommended quick response statement and for response is determined as the target quick response statement. Specifically, the process of automatically matching the target quick response statement from the preset quick response statement set based on the regular response statements of the target agent (i.e., the response statement manually input by the manual customer service) can be that, during the target agent client detects that the target agent has entered a regular response statement in an information input box (i.e., under the situation that the manually entered regular response statement has not been sent to the server of the manual customer service system), the target agent client automatically determines the recommended quick response statement that matches the regular response statement entered in the information input box based on the pre-stored quick statement set, and prompts the target customer service to select the target quick response statement from the recommended quick response statement. For another example, the above preset condition can also be that a maximum similarity is reached. Correspondingly, the server automatically selects and determines, from the preset quick statement set, a quick response statement having the maximum similarity with the regular response statement as the target quick response statement. Specifically, the process of automatically matching the target quick response statement from the preset quick response statement set based on the regular response statement of the target agent (i.e., the response statement manually input by the manual customer service) can also be that the target agent client uploads the regular response statement entered by the target agent in the information input box to the server of the manual customer service system (i.e., under the situation that the manually entered regular response statement has been sent to the server of the manual customer service system), and the server of the manual customer service system automatically determines the target quick response statement that matches the regular response statement uploaded by the target agent client based on the pre-stored quick statement set.

S 104, determining a target intention label corresponding to the target quick response statement based on a preset first correspondence, where the first correspondence includes a correspondence between the target quick response statement and the target intention label pre-stored in the manual customer service system.

Considering that the agent can determine, based on business experience, a question that may be raised by the user and a true intention for the user to raise the question, a quick response statement as well as the user intention label corresponding to the quick response statement are uploaded to the server of the manual customer service system through the agent client, so as to enable the agent to quickly respond to the user question by using the pre-set quick response statement during actual business processing.

Specifically, while the agent uploads the set quick response statements to the server of the manual customer service system through the agent client, corresponding user intention labels are set for respective quick response statements. Correspondingly, the server of the manual customer service system stores the correspondence between the pre-set quick response statements and the user intention labels in a corresponding database, so as to determine the target intention label corresponding to the target quick response statement based on the above correspondence after obtaining the target raised question submitted by the user to the manual customer service system and the target quick response statement corresponding to the target raised question.

S 106, labeling the target raised question and generating a user intention recognition sample set based on the target intention label, where the user intention recognition sample set is used to train a user intention recognition model used by an intelligent customer service system.

Specifically, based on the dialogue data generated by the manual customer service system, it is possible to obtain the target raised question submitted by the user to the manual customer service system, as well as the target quick response statement corresponding to the target raised question. This means that the correspondence between the target raised question and the target quick response statement can be obtained. Therefore, based on the correspondence between the preset target quick response statement and the target intention label, the target intention label corresponding to the target raised question can be determined. Thus, based on this target intention label, the target raised question can be labeled, that is, the intention of the target raised question can be labeled, and a user intention recognition sample is generated. After labeling a large number of target raised questions, a user intention recognition sample set is generated.

Due to the fact that the above user intention recognition sample set is generated based on real dialogue data from the manual customer service system, the above user intention recognition sample set includes user questions that cannot be obtained by the intelligent customer service system and thus cannot be labeled by the intelligent customer service system, such as user questions that cannot be accurately answered by the intelligent customer service system and in turn are transferred to be answered by the manual customer service system, and user questions that are directly answered by manual customer service but cannot be recognized by the intelligent customer service. The user questions that cannot be obtained by the intelligent customer service system are obtained from the manual customer service system and are labeled, to generate a user intention recognition sample set, which can improve the coverage rate of the user questions that cannot be recognized by the intelligent customer service system included in the user intention recognition sample set. Furthermore, the user intention recognition model used by the intelligent customer service system is trained by using the above user intention recognition sample set, that is, the above user intention recognition sample is input into the user intention recognition model used by the intelligent customer service system, and the model parameters in the user intention recognition model are iteratively trained by using the machine learning method to obtain the user intention recognition model with updated model parameters. Where the updated model parameters of the user intention recognition model are model parameters determined when a target function corresponding to the user intention recognition model converges. Furthermore, the updated user intention recognition model is utilized in the intelligent customer service system to recognize the user questions, which can improve recognition accuracy of the user intention recognition model, and thereby improve service quality of the intelligent customer service system.

In a specific implementation, the above customer service scenario can be a business consulting scenario or a scenario of call in arrears. Taking the scenario of call in arrears as an example, the agent needs to first determine, based on business experience, the questions that may be raised by the user in the scenario of call in arrears, as well as the true intention of the user questions. For example, the agent determines that the user may raise a question in the scenario of call in arrears that a repayment has been made but a message for call in arrears is still received. That is, the question raised by the user may be "Why do you still remind me to repay after I repaid the loan?" Therefore, it is determined that the true intention of the user to raise this question is to inquire about the situation where the repayment has been made. Based on this, the agent can preset the corresponding quick response statement to be "We have verified that the repayment has been successfully made, and we apologize for any inconvenience caused" to quickly respond to the user question regarding the situation where he has repaid the loan but still received a message for call in arrears, and to set "repaid already" as the user intention label of the quick response statement, that is, there is a correspondence between the quick response statement "We have verified that the repayment has been successfully made, and we apologize for any inconvenience caused" and the user intention label "repaid already". The quick response statement "We have verified that the repayment has been successfully made, and we apologize for any inconvenience caused", the user intention label "repaid already", and their correspondence are stored in the database in the backend of the manual customer service system.

Furthermore, in the process of the actual business processing, if the agent encounters a user who inquiries about "repaid already", for example, the agent acquiring the target raised question submitted by the user to the manual customer service system that "Why do you still remind me to repay after I repaid the loan", and for another example, the agent acquiring the target raised question submitted by the user to the manual customer service system that "Why did I still receive a message for call in arrears after I repaid the loan", in either case, the agent can use the preset quick response statement "We have verified that the repayment has been successfully made, and we apologize for any inconvenience caused" to respond quickly. That is, the target quick response statement "We have verified that the repayment has been successfully made, and we apologize for any inconvenience caused" is uploaded to the server of the manual customer service system through the agent client, to enable the server of the manual customer service system to send the target quick response statement to the corresponding user terminal. Correspondingly, the backend server used for labeling the user question obtains the target raised question of the user and the corresponding target quick response statement of the target raised question "We have verified that the repayment has been successfully made, and we apologize for any inconvenience caused", and determines that the target intention label corresponding to the target quick response statement is "repaid already". Therefore, based on the target intention label, the target raised question can be labeled, that is, the target raised question "Why do you still remind me to repay after I repaid the loan" and the target raised question "Why did I still receive a message for call in arrears after I repaid the loan" are labeled with the target intention label "repaid already", and then a user intention recognition sample for training the user intention recognition model used in the intelligent customer service system is generated.

In the embodiment of the present application, by obtaining the dialogue data generated by the manual customer service system, determining the target quick response statement corresponding to the target raised question, and then determining, in combination with the correspondence between the preset quick response statement and the user intention label, the target intention label corresponding to the target quick response statement, so as to obtain the correspondence between the target raised question and the target intention label, the labeling user intention for the user question is thus achieved and then the generated user intention recognition sample set is applied to the user intention recognition model in the intelligent customer service system. That is, by fully utilizing the dialogue data generated in the manual customer service system, the user intention training sample set required in the intelligent customer service system is automatically generated, and real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

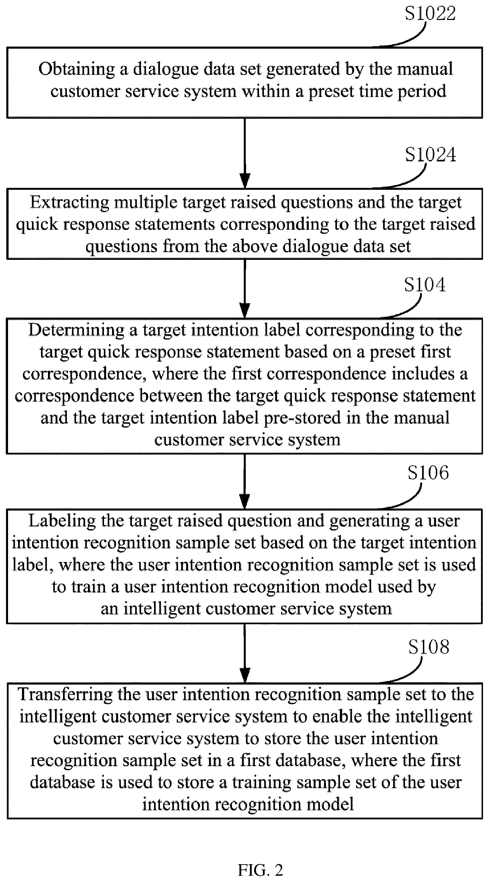

For the customer service scenario, due to the fact that the intelligent customer service and the manual customer service are usually in a turned on state synchronously, there may be a situation that switching between the intelligent customer service and the manual customer service exists during a user raising a question. For the situation that the intelligent customer service is switched to the manual customer service during the user raising the question, the question submitted by the user to the manual customer service system is likely to be a question that the intelligent customer service system cannot respond to. Therefore, by obtaining the dialogue data between the user and the agent generated by the manual customer service system, that is, by obtaining the target raised question of the user and the target quick response statement of the agent to the target raised question, and based on the correspondence between the target quick response statement and the target intention label pre-stored in the manual customer service system, it is achieved that the target raised question corresponding to the target quick response statement is automatically labeled, thus, the real business flow of the manual customer service system is closely linked with the user intention recognition needs of the intelligent customer service system. This not only enables the automatic generation of a large number of user intention recognition samples, but also improves the coverage rate of the user questions that cannot be recognized by the intelligent customer service system. Based on this, as shown in FIG. 2, the above S 102, obtaining a target raised question submitted to the manual customer service system and a target quick response statement corresponding to the target raised question specifically includes:
S 1022, obtaining a dialogue data set generated by the manual customer service system within a preset time period;
S 1024, extracting multiple target raised questions and the target quick response statements corresponding to the target raised questions from the above dialogue data set.

Correspondingly, after the above S 106, labeling the target raised question and generating a user intention recognition sample set based on the target intention label, the following is further included:
S 108, transferring the user intention recognition sample set to the intelligent customer service system to enable the intelligent customer service system to store the user intention recognition sample set in a first database, where the first database is used to store a training sample set of the user intention recognition model.

Specifically, after obtaining the dialogue data set generated by the manual customer service system within the preset time period, multiple target raised questions raised by users and the target quick response statement of the manual customer service to each target raised question are extracted from the dialogue data set. Based on the correspondence between the target quick response statement and the target intention label pre-stored in the manual customer service system, the target intention label corresponding to each target quick response statement is determined, and based on the corresponding target intention label, the user intention labeling for each target raised question raised by the user is performed, thereby obtaining multiple user intention recognition samples.

In the process of performing the user intention labeling on multiple target raised questions submitted to the manual customer service system, the user intention labeling of the target raised question of the user can be performed in real time. Specifically, each target raised question submitted by the user to the manual customer service system is acquired in real time, and the target quick response statement of the manual customer service to each target raised question is acquired in real time, and based on the correspondence between the target quick response statement and the target intention label pre-stored in the manual customer service system (i.e., the pre-stored correspondence between the quick response statement and the intention label), the target intention label corresponding to each target quick response statement is determined. Based on this target intention label, the user intention labeling for each target raised question raised by the user is performed in real time.

Specifically, it is also possible to first obtain the dialogue data set generated by the manual customer service system within the preset time period, and then perform the user intention labeling on multiple target raised questions in the dialogue data set. In the specific implementation, according to a preset time interval, the dialogue data set generated by the manual customer service system within the preset time period is obtained, and from this dialogue data set, multiple target raised questions and the corresponding target quick response statement for each target raised question are obtained, and user intention labeling for multiple target raised questions in the dialogue data set is performed based on the correspondence between the target quick response statement and the target intention label pre-stored in the manual customer service system. Considering that similar target raised questions may exist in the dialogue data set, before performing user intention labeling on multiple target raised questions, it is possible to perform deduplication processing on similar target raised questions in advance to avoid repeated labeling for the similar target raised questions, thereby improving labeling efficiency.

Specifically, when the dialogue data set generated by the manual customer service system is obtained, in the situation that the manual customer service responds to the user-raised question by directly using a preset quick response statement, the user-raised question can be labeled based on the pre-stored correspondence between the quick response statement and the intention label, so as to improve the labeling coverage rate of the user questions that cannot be recognized by the intelligent customer service system in the user intention recognition samples. Furthermore, considering the possibility that manual customer service may not directly use the preset quick response statement to respond to the user-raised question, but instead, use the regular response statement to respond to the user-raised question (i.e., manually inputting a response statement). At this point, it is possible to match the regular response statement with the quick response statement in the preset quick statement set based on similarity therebetween, and determine the quick response statement whose similarity meets the preset condition as the corresponding target quick response statement to the target raised question. In this way, in the case of manual input of the response statement by manual customer service to respond to the user-raised question, the user intention labeling can also be automatically performed on the user-raised question, thereby further improving the labeling coverage rate of the user questions that cannot be recognized by the intelligent customer service system in the user intention recognition samples.

In the specific implementation, the real business flow of the manual customer service system is closely linked with the user intention recognition needs of the intelligent customer service system. That is, after performing the user intention labeling on multiple target raised questions in the dialogue data set and generating the user intention recognition sample set, the user intention recognition sample set further needs to be transmitted to the intelligent customer service system, to improve the labeling coverage rate of user questions that cannot be recognized by the intelligent customer service system. Specifically, under the situation that an executive body of the user question labeling method is the first server of the manual customer service system, a data transmission channel can be set up between the manual customer service system and the intelligent customer service system, so as to achieve automatic recording of dialogue data between the user and the agent generated by real business flow on the manual customer service system side (i.e., including the user-raised question and the quick response statement), and based on the correspondence between the preset quick response statement and the user intention label, the user intention labeling is performed on user-raised question, and the user intention recognition sample is generated. And then, the manual customer service system automatically transmits the user intention recognition sample to the intelligent customer service system through the preset data transmission channel. In addition, under the situation that the executive body of the user question labeling method is the second server in communication connection with the first server of the manual customer service system, the second server obtains the dialogue data set generated within the preset time period from the first server of the manual customer service system at a preset time interval, obtains the correspondence between the preset quick response statement and the user intention label; extracts multiple target raised questions and target quick response statements corresponding to the target raised questions, and based on the correspondence between the preset quick response statements and the user intention labels, the user intention labelling of the target raised question is performed to generate a user intention recognition sample. Then, the second server automatically transmits the user intention recognition sample to the intelligent customer service system. The intelligent customer service system automatically trains the user intention recognition model based on the obtained user intention recognition samples, and obtains a user intention recognition model with updated model parameters. This can improve the timeliness of updating the user intention recognition sample set, thereby improving the training timeliness of the user intention recognition model in the intelligent customer service system. Therefore, the accuracy of the user intention recognition model in identifying intention labels for the user-raised questions is improved, and the service quality of the intelligent customer service system is further improved.

In the specific implementation, the preset quick statement set and the user intention recognition sample set can also be sent to a sample verification terminal in advance, so that an operator can verify the quick response statements in the preset quick statement set and the user intention recognition sample set on a page of the sample verification terminal. For example, operations such as retrieval, review, and modification are performed on the quick response statements in the preset quick statement set and the user intention recognition sample set, and then the quick response statement set is updated based on the quick response statements that pass the verification, and the user intention recognition sample set that passes the verification is transferred to the intelligent customer service system.

In an embodiment of the present application, for the situation that both the manual customer service and the intelligent customer service are activated simultaneously, that is, under the application scenario that the switch between the intelligent customer service and the manual customer service exists during the process that the user raises the question, if the intelligent customer service is unable to recognize the question raised by the user during the service process, the user will trigger an enter into a manual customer service stage. Therefore, the user-raised questions received by the manual customer service system will inevitably contain a large number of user questions that cannot be recognized by the intelligent customer service system. Based on this, the real business flow of the manual customer service system is closely linked with the user intention recognition needs of the intelligent customer service system. This not only enables the automatic generation of a large number of user intention recognition samples, but also improves the coverage rate of the user questions that cannot be recognized by the intelligent customer service system.

In order to simplify the overall system architecture for labeling the user question and fully utilize the existing customer service system architecture (i.e., including the manual customer service system and the intelligent customer service system), through the dialogue data generated by the manual customer service system based on the real business flow and the pre-stored correspondence between the quick response statement and the intention label (i.e., the first correspondence mentioned above), the intention labelling is performed on the user question to obtain a user intention recognition sample set, and then the user intention recognition sample set is transmitted to the intelligent customer service system. Specifically, for the generation process of the dialogue data set of the manual customer service system, the above S 1022, obtaining a dialogue data set generated by the manual customer service system within a preset time period specifically includes:
step 1, storing the user-raised question submitted to the manual customer service system in a second database of the manual customer service system;
step 2, storing the quick response statement of a target agent client to the user-raised question in the second database of the manual customer service system, where the target agent client is an agent client assigned to respond to the user-raised question;
step 3, based on a second correspondence between the user-raised question and the quick response statement, obtaining the dialogue data set generated by the manual customer service system within the preset time period from the second database.

The above second database can store the second correspondence between the user-raised question submitted by the user to the manual customer service system and the quick response statement of the target agent client, as well as the first correspondence between the quick response statement and the user intention label set by the agent through the agent client in advance. Furthermore, considering that the user-raised questions submitted by the user to the manual customer service system may be reduplicative or irregular, instead of directly treating all the user questions stored in the second database as the target user questions, after obtaining the dialogue data set, the user-raised questions are preprocessed to obtain multiple target raised questions. This preprocessing includes at least one of the deduplication process and the standardization process, and then based on the above second correspondence, the target quick response statement corresponding to each target raised question is determined. Then, based on the above first correspondence, the target intention label corresponding to each target raised question is determined, and then the intention labeling of the target raised questions is performed based on target intention labels to obtain multiple user intention recognition samples. Each user intention recognition sample includes a third correspondence between the target raised question and the target intention label.

The above second correspondence can be determined based on a first message sequence number of the user-raised question submitted by the user to the manual customer service system, as well as a second message sequence number of the quick response statement of the target agent (i.e., the manual customer service) to the user-raised question. Specifically, the time of the first message sequence number should be earlier than the time of the second message sequence number.

During the process of the target agent responding to the user-raised question through the target agent client, the target agent can select a quick response statement that matches the user-raised question from the preset quick statement set for response. The above preset quick statement set can include a personal quick statement set and a shared quick statement set.

Specifically, a candidate quick response statement can also be recommended to the target agent. This candidate quick response statement is a quick response statement from the preset quick response statement set through automatic matching based on the response statement manually entered by the target agent in the information input box. In the specific implementation, matching may be performed first within the personal quick statement set to find the personal quick response statement whose similarity with the response statement manually entered by the target agent meets the preset condition. If no available quick response statement is found in the personal quick statement set, matching is then performed within the shared quick statement set to determine the available shared quick response statement.

In the embodiment of the present application, by storing the user-raised question submitted by the user to the manual customer service system and the quick response statement of the target agent to the user-raised question in the second database of the manual customer service system, the target raised question to be labeled and the corresponding target quick response statement can be extracted therefrom, thereby achieving user intention labeling of the target raised question, and obtaining multiple user intention recognition samples.

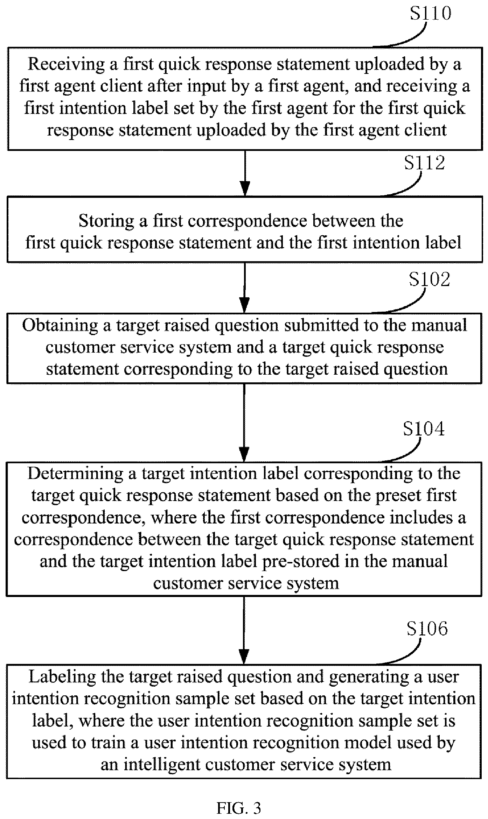

During the process of presetting quick response statements, the agent can also set the user intention label corresponding to each quick response statement, so as to achieve quick user intention labeling of the user-raised question in the subsequent process that the agent quickly responds to the user-raised question by using the quick response statement. Based on this, as shown in FIG. 3, before the above S102, obtaining a target raised question submitted to the manual customer service system, the following is further included:
S110, receiving a first quick response statement uploaded by a first agent client, and receiving a first intention label corresponding to the first quick response statement uploaded by the first agent client;
S 112, storing a first correspondence between the first quick response statement and the first intention label.

Specifically, considering that the manual customer service system includes multiple agents, and each agent can determine, based on business experience, a question that may be raised by the user and a true intention for the user to raise the question, the corresponding quick response statement is set through the agent client, and the corresponding user intention label are set for each quick response statement and are pre-stored in the second database of the manual customer service system through the agent client, so as to quickly perform the user intention labeling on the user-raised question after the target raised question submitted by the user to the manual customer service system is obtained.

In the specific implementation, the first agent client receives the first quick response statement input by the first agent as well as the first intention label set by the first agent for the first quick response statement. Then, the first agent client uploads the first quick response statement and the first intention label to the server of the manual customer service system. The server of the manual customer service system stores the first correspondence between the first quick response statement and the first intention label in the second database of the manual customer service system.

Furthermore, considering that when the corresponding user intention label is set for the quick response statement, multiple alternative user intention labels can be automatically recommended to the agent for quick selection, so as to improve the efficiency, accuracy, and standardization of setting the intention label corresponding to the quick response statement by the agent, based on this, the above S110, receiving a first intention label corresponding to the first quick response statement uploaded by the first agent client specifically includes the following.

Step 1, determining at least one candidate intention label corresponding to the first quick response statement.

The above candidate intention label can be determined based on the user intention label corresponding to the shared quick statement or the personal quick statement in the preset quick statement set. Specifically, the quick response statement currently set by the first agent is matched with the shared quick statement or the personal quick statement in the preset quick statement set based on similarity, and the intention label corresponding to the quick statement whose similarity meets the preset condition is determined as the candidate intention label.

Step 2, receiving the first intention label uploaded by the first agent client, where the first intention label is a user intention label of the at least one candidate intention label.

Specifically, the above at least one candidate intention label is sent to the first agent client. The first agent client displays the at least one candidate intention label and prompts the first agent to set the first intention label for the first quick response statement based on the at least one candidate intention label, receives the user intention label selected by the first agent from the at least one candidate intention label as the first intention label, and then uploads the first intention label to the server of the manual customer service system to enable to the server of the manual customer service system to store the correspondence between the first quick response statement and the first intention label.

In order to ensure the privacy of the quick response statements and improve the interoperability of the quick response statements set by multiple agents, and then improve the selectivity of the quick response statements by the agents, the above quick statement set can include: a personal quick statement set and a shared quick statement set, and correspondingly, the above S112, storing the correspondence between the first quick response statement and the first intention label specifically includes:
adding the first quick response statement to the personal quick statement set corresponding to the first agent client, and storing the correspondence between the first quick response statement and the first intention label.

Specifically, the first quick response statement and the corresponding first intention label set by the first agent through the first agent client can be directly stored in the corresponding personal quick statement set. At the same time, the first agent can also request that the first quick response statement and the corresponding first intention label be stored in the shared quick statement set, so that the first quick response statement can be used by other agents.

Considering the possibility of multiple agents using the same agent client, the first agent client can be distinguished based on a login account of the agent. Specifically, in the personal quick statement set corresponding to the manual customer service account logged in on the first agent client, the first quick response statement is added and the correspondence between the first quick response statement and the first intention label is stored.

Furthermore, in order to improve the sharing and utilization of the quick response statements, it is possible to provide a function of setting the personal quick statements as the shared quick statements for the agent, so as to improve the selectivity of the quick response statements for the agent and then improve the comprehensiveness of the intention labeling of the target raised question. Based on this, after adding the first quick response statement to the personal quick statement set corresponding to the first agent client, the following is further included:
receiving a shared quick statement setting request sent by the first agent client, where the shared quick statement setting request includes the first quick response statement;
updating the shared quick statement set based on the first quick response statement in the shared quick statement setting request and the first intention label corresponding to the first quick response statement.

The above personal quick statement set can correspond to the login account of the agent. After using a certain agent client to log in to the respective account, the agent can enter a viewing page of the corresponding personal quick statement set. The above shared quick statement set can correspond to a certain login account group which can include multiple login accounts under a certain customer service business category. After using a certain agent client to log in to any login account in the login account group, the agent can not only enter the viewing page of the personal quick statement set corresponding to the login account, but also enter the viewing page of the corresponding shared quick statement set.

Specifically, for the updating process of the shared quick statement set, the first quick response statement that the first agent client requests to be converted into a shared quick statement can be directly added to the shared quick statement set; and the correspondence between the first quick response statement and the first intention label is stored in the shared quick statement set. Furthermore, in order to ensure the accuracy and the standardization of the quick response statements and the user intention labels contained in the shared quick statement set, it is also possible to first determine whether a second quick response statement exists in the shared quick statement set, where the second quick statement matches the first quick response statement that the first agent client requests to be converted into the shared quick statement. If existing, based on the similarity between the first intention label and the second intention label corresponding to the second quick response statement, corresponding feedback information is returned to the first agent client, which can also achieve the effect of verifying the first intention label in the personal quick response statement set. If not existing, the shared quick statement set is updated based on the first quick response statement that the first agent client requests to be converted into the shared quick statement and the corresponding first intention label.

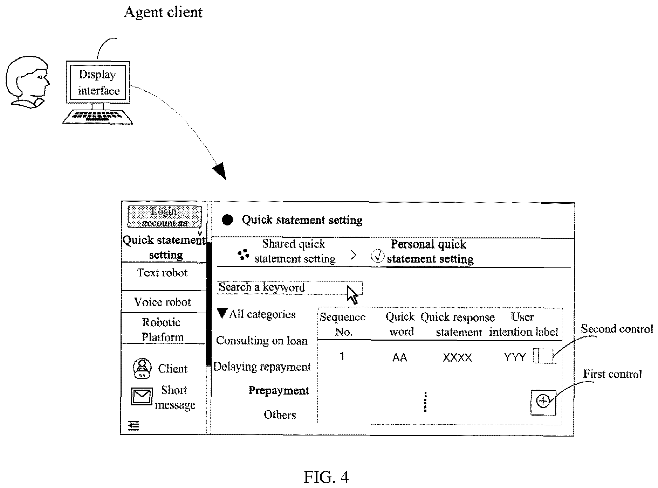

As shown in FIG. 4, the agent can log in to the respective login account aa through the agent client to enter the quick statement setting interface. In the quick statement setting interface, the set personal quick response statements and the shared quick response statements corresponding to the agent group that the agent belongs to can be viewed. The corresponding quick response statements can be quickly searched through the information input box for searching a keyword. By clicking on the first control on the lower part of the interface, the agent can add a new quick response statement and its corresponding user intention label; and by clicking on the second control, the agent requests a personal quick response statement to be set as a shared quick statement.

While improving the sharing and utilization of the quick response statements, it is also necessary to further improve the accuracy and the standardization of the quick response statements and the user intention labels added to the shared quick statement set. Therefore, instead of directly adding the first quick response statement and the corresponding first intention label to the shared quick statement set, the first intention label is scored by a triggered second agent client, and based on the scoring result, the true intention label of the first quick response statement is determined. Specifically, the updating the shared quick statement set based on the first quick response statement in the shared quick statement setting request and the first intention label corresponding to the first quick response statement specifically includes:
step 1, determining whether a second quick response statement that matches the first quick response statement exists in the shared quick statement set;
step 2, if the determining result is not existing, adding the first quick response statement to the shared quick statement set; specifically, the first quick response statement can also be preprocessed first, and then the preprocessed first quick response statement can be added to the shared quick statement set. The preprocessing can include at least one of the error correction processing and the standardization processing;
step 3, determining a true intention label of the first quick response statement based on the first intention label corresponding to the first quick response statement, where the true intention label is determined based on a scoring result for the first intention label uploaded by the second agent client; specifically, the second agent client can include: at least one of an agent client on which a respective login account in the login account group corresponding to the shared quick statement set is logged in to and a specified agent client. The specified agent client can be an agent client used by professionals.
step 4, storing a correspondence between the first quick response statement and the true intention label in the shared quick statement set.

Specifically, if the similarity between at least one quick response statement in the shared quick statement set and the first quick response statement is greater than the preset threshold, it is determined that a second quick response statement that matches the first quick response statement exists. Correspondingly, if the similarity between each quick response statement in the shared quick statement set and the first quick response statement is less than or equal to the preset threshold, it is determined that no second quick response statement that matches the first quick response statement exists.

In order to improve the accuracy and the standardization of the user intention labels for shared quick statements, it is necessary to first verify whether the first intention label corresponding to the first quick response statement meets a preset constraint condition. If so, the first quick response statement is added to the shared quick statement set and the correspondence between the first quick response statement and the first intention label is stored in the shared quick statement set; and if not, the true intention label corresponding to the first quick response statement is determined, and the correspondence between the first quick response statement and the true intention label is stored in the shared quick statement set. Furthermore, the true intention label can be sent to the first agent client of the first agent, so that the first agent can determine whether to update the correspondence between the first quick response statement and the first intention label in the corresponding personal quick statement set based on the true intention label.

For the process of verifying whether the first intention label corresponding to the first quick response statement meets the preset constraint condition, the correspondence between the first quick response statement and the first intention label can be sent to at least one second agent client of a second agent, where the second agent can be a respective agent in the target agent group, and the first agent and the second agent belong to the target agent group. Then, the scoring result for the first intention label returned by the second agent client is received, and based on the scoring results for the first intention label by multiple second agents, it is determined whether the first intention label corresponding to the first quick response statement meets the preset constraint condition. For example, if the comprehensive score is greater than the preset score threshold, it is determined that the preset constraint condition is met; and if the comprehensive score is less than or equal to the preset score threshold, it is determined that the preset constraint condition is not met.

That is to say, in the case where there is no second quick response statement that matches the first quick response statement in the shared quick statement set, the correspondence between the first quick response statement and the first intention label is not directly stored in the shared quick statement set. Instead, the correspondence between the first quick response statement and the first intention label is first sent to the second agent client, and the second agent client returns a scoring result for the first intention label. The score value of the scoring result is proportional to the accuracy of the first intention label. Correspondingly, the server determines the comprehensive score of the first intention label based on the scoring results of multiple second agent clients, where the comprehensive score can be obtained by weighted average of the scores corresponding to the scoring results of multiple second agent clients. If the comprehensive score is greater than the preset score threshold, it is determined that the first intention label is the true intention label of the first quick response statement; and if the comprehensive score is less than or equal to the preset score threshold, the designated agent client is triggered to return the true intention label of the first quick response statement. Then, the correspondence between the first quick response statement and the true intention label is stored in the shared quick statement set.

The designated agent client can be an agent client used by professionals. This agent client has specialized knowledge in a specific field and can more accurately determine the true intention and the true intention label corresponding to each response statement for raised questions in the field.

It should be noted that considering the possibility of multiple agents using the same agent client, the first agent client and the second agent client can be different agent clients or the same agent client, that is, different agents using the same agent client at different time. Then the login account of the first agent client and the login account of the second agent client can be different.

In the embodiment of the present application, it is first verified whether the first intention label corresponding to the first quick response statement meets the preset constraint condition. If so, the first quick response statement is added to the shared quick statement set and the correspondence between the first quick response statement and the first intention label is stored in the shared quick statement set; and if not, the true intention label corresponding to the first quick response statement is determined, and the final determined true intention label of the first quick response statement is sent to the first agent client of the first agent, so that the first agent determines whether to update the correspondence between the first quick response statement and the first intention label in the corresponding personal quick statement set based on the true intention label. This not only improves the accuracy and the standardization of the user intention labels of the shared quick statements, but also improves the accuracy and the standardization of the user intention labels of the personal quick statements.

After the above step 1, determining whether a second quick response statement that matches the first quick response statement exists in the shared quick statement set, the following is further included:
if the determining result is existing, determining whether similarity between the first intention label and a second intention label corresponding to the second quick response statement is greater than a preset threshold;
if yes, sending first feedback information to the first agent client, where the first feedback information indicates that the shared quick statement set already contains the first quick response statement;
if not, sending second feedback information to the first agent client, where the second feedback information includes the recommended second intention label.

Specifically, in the case that a second quick response statement that matches the first quick response statement exists in the shared quick statement set, instead of adding a duplicate quick response statement to the shared quick statement set or performing no processing, the similarity between the first intention label and the corresponding second intention label shall be compared. Considering that the user intention labeling verification has been performed on the second intention label corresponding to the second quick response statement in the shared quick statement set and the verification result is qualified, that is, the second intention label is trustworthy, therefore, it is possible to first compare the similarity between the first intention label and the second intention label, and return corresponding feedback information to the first agent client based on the similarity comparison result. And in the case that the similarity between the first intention label and the second intention label is relatively low, there may be a problem of inaccurate setting of the first intention label. In this case, the second intention label can be returned to the first agent client, so that the first agent can decide whether to modify the first intention label of the first quick response statement in the personal quick statement set based on the second intention label, so as to improve the accuracy and the standardization of the user intention label configured for the quick response statement in the personal quick statement set, thereby improving the accuracy of user question intention labeling.

In order to further improve the efficiency of the user question intention labeling, in the case that the quick statement set includes the personal quick statement set and the shared quick statement set, before the above S 104, determining a target intention label corresponding to the target quick response statement based on a preset first correspondence, the following is further included:
if the target quick response statement belongs to the personal quick statement set, retrieving the first correspondence from the personal quick statement set;
if the target quick response statement belongs to the shared quick statement set, retrieving the first correspondence from the shared quick statement set.

In the embodiment of the present application, by recording the source information corresponding to the target quick response statement, where the source information includes the identification of the personal quick statement set or the identification of the shared quick statement set, it is allowed to quickly find the first correspondence recorded for the target quick response statement in the personal quick statement set or the shared quick statement set, and then quickly determine the target intention label corresponding to the target raised question.

After the above S 106, labeling the target raised question and generating a user intention recognition sample set based on the target intention label, the following is further included:
training the user intention recognition model based on the user intention recognition sample set by using a machine learning method, to obtain a trained user intention recognition model;
performing intention recognition on the user-raised question received by the intelligent customer service system by using the user intention recognition model, and outputting the corresponding user intention recognition result.

Specifically, the user intention recognition sample set obtained from the dialogue data generated by the manual customer service system is input into the user intention recognition model to be trained. The machine learning method is used to iteratively train model parameters of the user intention recognition model based on the above user intention recognition sample set, to obtain the trained user intention recognition model. The model parameters of the trained user intention recognition model are model parameters determined when the target function corresponding to the user intention recognition model converges. Furthermore, in the intelligent customer service system, the trained user intention recognition model is used to perform intention recognition on the user-raised question received by the intelligent customer service system, and output the corresponding user intention recognition result, which can improve the recognition accuracy and thus improve the service quality of the intelligent customer service system.

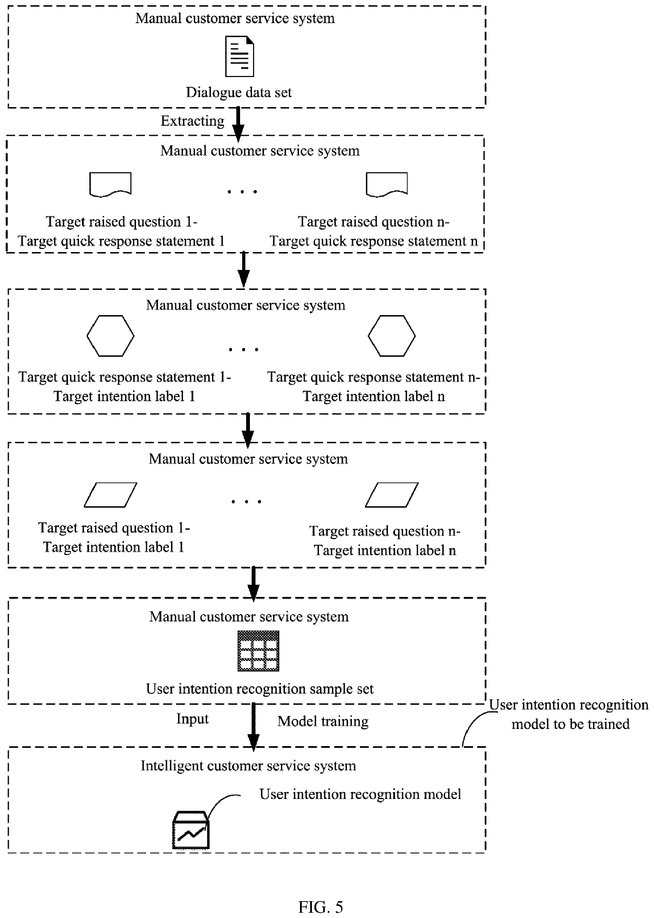

In the specific implementation, the training process of the user intention recognition model of the intelligent customer service system is shown in FIG. 5. The dialogue data set generated by the manual customer service system within a preset time period is obtained, a target raised question 1 to a target raised question n submitted by the users to the manual customer service system and the target quick response statements (i.e., a target quick response statement 1 to a target quick response statement n) corresponding to the target raised question 1 to the target raised question n are extracted from the dialogue data set. Then based on the correspondence between the target quick response statements and the target intention labels pre-stored in the manual customer service system, the target intention labels respectively corresponding to the target raised question 1 to the target raised question n (i.e., the target intention label 1 to the target intention label n) are determined. And the target raised question 1 to the target raised question n are labeled based on the target intention label 1 to the target intention label n, to generate a user intention recognition sample set (for example, the target raised question 1-the target intention label 1 to the target raised question n- the target intention label n). Further, the user intention recognition sample set obtained from the manual customer service system is input into the user intention recognition model to be trained used by the intelligent customer service system. Using the machine learning method and based on the above user intention recognition sample set, the model parameters of the user intention recognition model are iteratively trained to obtain the trained user intention recognition model.

In the embodiment of the present application, by fully utilizing the dialogue data generated in the manual customer service system, the user intention training sample set required in the intelligent customer service system is automatically generated, and the real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

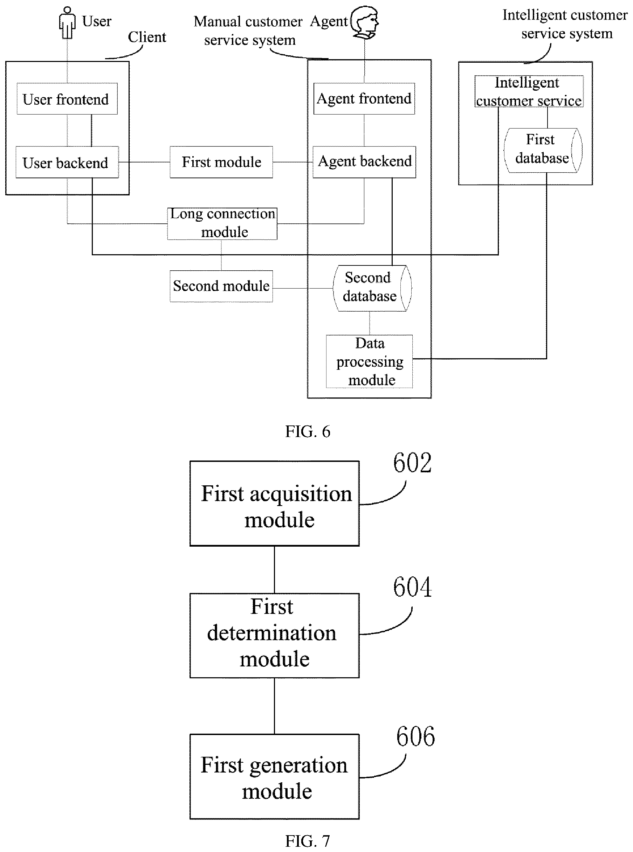

In a specific embodiment, under the situation that an executive body of the user question labeling method is the first server of the manual customer service system, the specific application scenario of the user question labeling method is shown in FIG. 6. Firstly, the agent of the manual customer service system determines, based on business experience, a question may be raised by the user and the true intention of the user-raised question in a specific business scenario. The quick response statements used for quick response to the user questions and the intention labels corresponding to the quick response statements which are preset by the agent for the questions that may be raised by the users in the agent frontend page of the manual customer service system are received by the agent backend of the manual customer service system and stored in the second database of the manual customer service system. Then after receiving that the user enters into the manual customer service system through the user frontend, the manual customer service system automatically assigns the agent to the user.

Specifically, a connection channel between the user and the agent is preset through a first module, where the first module is determined based on a port from which the user accesses to the manual customer service system. For example, the port of the manual customer service system can include any one of a WeChat applet port, a web page port, and an application port. If the user accesses to the manual customer service system from the WeChat applet port (that is, the first module is the WeChat applet port), the corresponding agent of the WeChat applet is assigned to the user, and a connection between the agent and the user is established through a long connection module, so that in the case of many users, the agent can maintain a dialogue with the user through the long connection module, and then switch between different users.

Further, during the dialogue between the agent and the user, the user-raised questions and the response statements of the agent are stored in the second database through the long connection module and the second module in turn. Specifically, when the user and the agent have a dialogue, the user sends a question message (that is, the user-raised question) to the manual customer service system through the agent frontend, the agent backend and the long connection module. And the agent sends a reply message (i.e., a customer service response statement, which can be a regular response statement or a quick response statement) to the user client through the agent frontend, the agent backend, and the long connection module. The long connection module is used to verify whether the formats of the question message and the reply message are correct and deliver the messages to the second module (including the kafka module and the message module in turn). The second module is used to preprocess the messages (such as saving, recording the message serial number, buffering, etc.), and then store the preprocessed messages in the second database.

Furthermore, the data processing module obtains the dialogue data set generated by the manual customer service system within a preset time period from the second database, extracts multiple target raised questions submitted by the users to the manual customer service system from the dialogue data set, and determines the target quick response statement of the agent to each target raised question based on the first message sequence number of the raised question and the second message sequence number of the quick response statement. And based on the correspondence between the quick response statements and the intention labels pre-stored in the second database of the manual customer service system, the data processing module determines the intention label corresponding to the target quick response statement of the agent to each target question, and then determines the correspondence between the target raised questions and the intention labels, thereby achieving user intention labeling of the target raised questions and generating a user intention recognition sample set. The above determining the target quick response statement of the agent to each target question based on the first message sequence number of the raised question and the second message sequence number of the quick response statement includes: determining a specific raised question corresponding to the quick response statement based on the matching degree between a keyword in the quick response statement and a keyword of at least one raised question; alternatively, determining one or more specific raised questions corresponding to the quick response statement based on the matching degree between the quick response statement and at least one raised question. After determining one or more specific raised questions corresponding to the quick response statement, based on the correspondence between the quick response statement and the intention label pre-stored in the second database of the manual customer service system, the intention label corresponding to the target quick response statement of the agent to each target raised question is determined, and then the correspondence between the target raised question and the intention label is determined, so that the user intention labeling of the target raised question is achieved and the user intention recognition sample set is generated.

Furthermore, the long connection is established between the manual customer service system and the intelligent customer service system in advance, and the user intention recognition sample set generated in the manual customer service system is transmitted to the intelligent customer service system through the long connection channel, so that the intelligent customer service system stores the user intention recognition sample set in the first database, trains the user intention recognition model based on the user intention recognition sample set by using the machine learning method, to obtain a trained user intention recognition model, performs intention recognition on the user-raised question received by the intelligent customer service system by using the trained user intention recognition model, and outputs the corresponding user intention recognition result.

In the user question labeling method of the embodiment of the present application, by obtaining the dialogue data generated by the manual customer service system, determining the target quick response statement corresponding to the target raised question, and then determining, in combination with the correspondence between the preset quick response statement and the user intention label, the target intention label corresponding to the target quick response statement, so as to obtain the correspondence between the target raised question and the target intention label, the labeling user intention for the user question is thus achieved and then the generated user intention recognition sample set is applied to the user intention recognition model in the intelligent customer service system. That is, by fully utilizing the dialogue data generated in the manual customer service system, the user intention training sample set required in the intelligent customer service system is automatically generated, and the real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

Corresponding to the user question labeling methods described in FIGS. 1 to 6, based on the same technical concept, an embodiment of the present application also provides a user question labeling apparatus. FIG. 7 is a schematic diagram of module composition of a user question labeling apparatus provided in an embodiment of the present application. The apparatus is used to perform the user question labeling methods described in FIGS. 1 to 6. As shown in FIG. 7, the apparatus includes:
a first acquisition module 702, configured to obtain a target raised question submitted to a manual customer service system and a target quick response statement corresponding to the target raised question, where the target quick response statement includes: at least one quick response statement in a preset quick statement set, and the quick response statement is a response statement preset in the manual customer service system for quick response to a user question;
a first determination module 704, configured to determine a target intention label corresponding to the target quick response statement based on a preset first correspondence, where the first correspondence includes a correspondence between the target quick response statement and the target intention label pre-stored in the manual customer service system;
a first generation module 706, configured to label the target raised question and generating a user intention recognition sample set based on the target intention label, where the user intention recognition sample set is used to train a user intention recognition model used by an intelligent customer service system.

In the user question labeling apparatus of the embodiment of the present application, by obtaining the dialogue data generated by the manual customer service system, determining the target quick response statement corresponding to the target raised question, and then determining, in combination with the correspondence between the preset quick response statement and the user intention label, the target intention label corresponding to the target quick response statement, so as to obtain the correspondence between the target raised question and the target intention label, the labeling user intention for the user question is thus achieved and then the generated user intention recognition sample set is applied to the user intention recognition model in the intelligent customer service system. That is, by fully utilizing the dialogue data generated in the manual customer service system, the user intention training sample set required in the intelligent customer service system is automatically generated, and the real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn to be transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

It should be noted that the embodiment of the user question labeling apparatus of the present application and the embodiments of the user question labeling methods of the present application are based on the same inventive concept. Therefore, reference for the specific implementation of this embodiment can be made to the implementation of the corresponding user question labeling method above, which will not be repeated again.

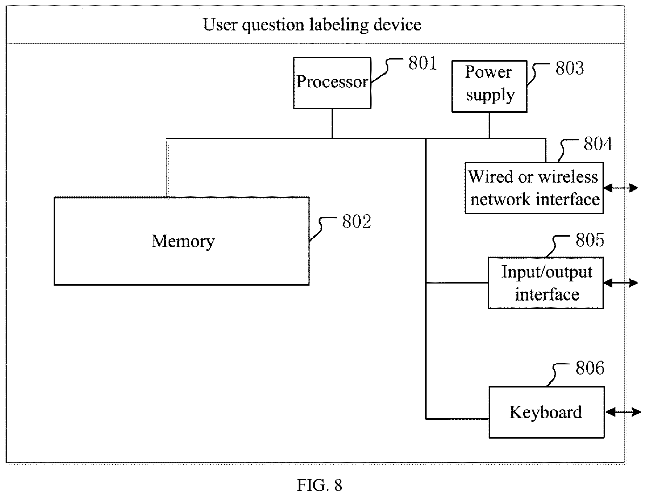

Further, corresponding to the methods described in FIGS. 1 to 6, based on the same technical concept, an embodiment of the present application also provides a user question labeling device. The device is used to perform the user question labeling methods above, as shown in FIG. 8.

The user question labeling device can vary significantly due to different configurations or performance, and may include one or more processors 801 and a memory 802, where the memory 802 can store one or more applications or data. The memory 802 can be temporary storage or persistent storage. The application stored in the memory 802 may include one or more modules (not shown), and each module may include a series of computer executable instructions. Furthermore, the processor 801 can be configured to communicate with the memory 802 to perform a series of computer executable instructions in the memory 802 in the user question labeling device. The user question labeling device can also include one or more power supplies 803, one or more wired or wireless network interfaces 804, one or more input/output interfaces 805, one or more keyboards 806, etc.

In a specific embodiment, the user question labeling device includes a memory, where one or more programs are stored in the memory, and the one or more programs can include one or more modules, and each module can include a series of computer executable instructions configured to be executed by one or more processors. When executed by the processor, the computer executable instructions contained in one or more programs are used to implement the following processes:
obtaining a target raised question submitted to a manual customer service system and a target quick response statement corresponding to the target raised question, where the target quick response statement includes: at least one quick response statement in a preset quick statement set, and the quick response statement is a response statement preset in the manual customer service system for quick response to a user question;
determining a target intention label corresponding to the target quick response statement based on a preset first correspondence, where the first correspondence includes a correspondence between the target quick response statement and the target intention label pre-stored in the manual customer service system;
labeling the target raised question and generating a user intention recognition sample set based on the target intention label, where the user intention recognition sample set is used to train a user intention recognition model used by an intelligent customer service system.

In the user question labeling device of the embodiment of the present application, by obtaining the dialogue data generated by the manual customer service system, determining the target quick response statement corresponding to the target raised question, and then determining, in combination with the correspondence between the preset quick response statement and the user intention label, the target intention label corresponding to the target quick response statement, so as to obtain the correspondence between the target raised question and the target intention label, the labeling user intention for the user question is thus achieved and then the generated user intention recognition sample set is applied to the user intention recognition model in the intelligent customer service system. That is, by fully utilizing the dialogue data generated in the manual customer service system, the user intention training sample set required in the intelligent customer service system is automatically generated, and the real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn to be transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

It should be noted that the embodiment of the user question labeling device of the present application and the embodiments of the user question labeling methods of the present application are based on the same inventive concept. Therefore, reference for the specific implementation of this embodiment can be made to the implementation of the corresponding user question labeling method above, which will not be repeated again.

Further, corresponding to the methods described in FIGS. 1 to 6, based on the same technical concept, an embodiment of the present application also provides a storage medium for storing computer executable instructions. In a specific embodiment, the storage medium can be a USB flash disk, an optical disk, a hard disk, etc. The computer executable instructions stored on the storage medium can achieve the following process when executed by the processor:
obtaining a target raised question submitted to a manual customer service system and a target quick response statement corresponding to the target raised question, where the target quick response statement includes: at least one quick response statement in a preset quick statement set, and the quick response statement is a response statement preset in the manual customer service system for quick response to a user question;
determining a target intention label corresponding to the target quick response statement based on a preset first correspondence, where the first correspondence includes a correspondence between the target quick response statement and the target intention label pre-stored in the manual customer service system;
labeling the target raised question and generating a user intention recognition sample set based on the target intention label, where the user intention recognition sample set is used to train a user intention recognition model used by an intelligent customer service system.

When the computer executable instructions stored on the storage medium in the embodiment of the present application are executed by the processor, by obtaining the dialogue data generated by the manual customer service system, determining the target quick response statement corresponding to the target raised question, and then determining, in combination with the correspondence between the preset quick response statement and the user intention label, the target intention label corresponding to the target quick response statement, so as to obtain the correspondence between the target raised question and the target intention label, the labeling user intention for the user question is thus achieved and then the generated user intention recognition sample set is applied to the user intention recognition model in the intelligent customer service system. That is, by fully utilizing the dialogue data generated in the manual customer service system, the user intention training sample set required in the intelligent customer service system is automatically generated, and the real business flow of the intelligent customer service system is linked closely with the user intention recognition needs of the intelligent customer service system. In this way, not only can the labeling efficiency of the user-raised question be improved, so that a large number of user intention recognition samples are provided for the intelligent customer service system, but also the coverage rate of the user questions that cannot be recognized by the intelligent customer service system included in the user intention recognition sample set can be improved, since the user intention recognition sample set is obtained by automatically labeling user intention for the target raised questions submitted by the users to the manual customer service system which not only include user questions that cannot be accurately answered by the intelligent customer service system and are in turn transferred to be answered by the manual customer service system, but also include user questions that are directly answered by the manual customer service but cannot be recognized by the intelligent customer service. Thus, recognition accuracy of the user intention recognition model is improved, and service quality of the intelligent customer service system is ensured.

It should be noted that the embodiment of the storage medium of the present application and the embodiments of the user question labeling methods of the present application are based on the same inventive concept. Therefore, reference for the specific implementation of this embodiment can be made to the implementation of the corresponding user question labeling method above, which will not be repeated again.

The above describes the specific embodiments of the present application. Other embodiments are within the scope of the attached claims. In some cases, actions or steps recorded in the claims may be executed in a different order than those in the embodiments and the desired results can still be achieved. In addition, the processes depicted in the accompanying drawings may not necessarily follow the specific or continuous order as shown to achieve the desired results. In some implementations, multitasking and parallel processing are also possible or may be advantageous.

In the 1990s, there was a clear distinction between hardware improvements (such as improvements in circuit structures such as diodes, transistors, and switches) and software improvements (such as improvements in the method flow) for a technology improvement. However, with the development of technology, many improvements in current method flows can now be seen as direct improvements in hardware circuit structures. Designers almost always obtain the corresponding hardware circuit structure by programming the improved method flow into the hardware circuit. Therefore, it cannot be said that the improvement of a method flow cannot be achieved using hardware entity modules. For example, a programmable logic device (programmable logic device, PLD) (such as a field programmable gate array (Field Programmable Gate Array, FPGA)) is an integrated circuit whose logical functions are determined by the user programming the device. Designers can program to "integrate" a digital system onto a single PLD, without requiring a chip manufacturer to design and produce a specialized integrated circuit chip. Moreover, nowadays, instead of manually producing an integrated circuit chip, this type of programming is mostly implemented by using "logic compiler (logic compiler)" software, which is similar to the software compiler used in program development and writing. The original code before compilation also needs to be written in a specific programming language, which is called hardware description language (Hardware Description Language, HDL), and there is not only one type of the HDL, but there are many types, such as ABEL (Advanced Boolean Expression Language), AHDL (Alternative Hardware Description Language), Confluence, CUPL (Cornell University Programming Language), HD Cal, JHDL (Java Hardware Description Language), Lava, Lola, My HDL, PALASM, RHDL (Ruby Hardware Description Language), etc. The most commonly used currently are VHDL (Very-High-Speed Integrated Circuit Hardware Description Language) and Verilog. Those skilled in the art should also be aware that it is easily to obtain the hardware circuit that implements the logical method flow simply by logically programming the method flow into an integrated circuit by using the above hardware description languages.

The controller can be implemented in any appropriate way, for example, in the form of a microprocessor or a processor, a computer readable medium that stores a computer-readable program code (such as software or firmware) that can be executed by the (micro) processor, a logic gate, a switch, an application specific integrated circuit (Application Specific Integrated Circuit, ASIC), a programmable logic controller, and an embedded microcontroller. Examples of the controller include but are not limited to the following microcontrollers: ARC 625D, Atmel AT91SAM, Microchip PIC18F26K20, and Silicon Labs C8051F320. The controller can also be implemented as part of the control logic of the memory. Those skilled in the art also know that, in addition to implementing the controller in pure computer readable program code, it is entirely possible to logically program the method steps to enable the controller to achieve the same functionality in the form of a logic gate, a switch, a specialized integrated circuit, a programmable logic controller, and an embedded microcontroller. Therefore, this type of controller can be considered as a hardware component, and the apparatuses included in it for achieving various functions can also be considered as structures within the hardware component. Alternatively and even, apparatuses used to implement various functions can be viewed as both software modules for implementing the methods and structures within the hardware components.

The system, the apparatus, the module or the unit illustrated in the above embodiments can be implemented by computer chips or entities, or by products with certain functions. A typical implementation device is a computer. Specifically, the computer can be a personal computer, a laptop, a cellular phone, a camera phone, a smartphone, a personal digital assistant, a media player, a navigation device, an email device, a game console, a tablet, a wearable device, or any combination of these devices.

For the convenience of description, when describing the above apparatuses, they are divided into various functional units and described separately. Of course, in implementing the present application, the functions of each unit can be implemented in the same software and/or hardware.

Those skilled in the art should understand that the embodiments of the present application may be provided as methods, systems, or computer program products. Therefore, the present application may take the form of complete hardware embodiments, complete software embodiments, or embodiments combining software and hardware aspects. Moreover, the present application may take the form of a computer program product implemented on a computer available storage medium (including but not limited to a disk memory, a CD-ROM, an optical memory, etc.) containing a computer available program code.

The present application is described with reference to the flowcharts and/or the block diagrams of the method, the device (system), and the computer program product according to the embodiments of the present application. It should be understood that each process and/or box in the flowchart and/or the block diagram as well as a combination of processes and/or boxes in the flowchart and/or the block diagram can be implemented by computer program instructions. These computer program instructions can be provided to a general-purpose computer, a specialized computer, an embedded processor, or processors of other programmable data processing devices to generate a machine to enable the instructions executed by the computer or processors of other programmable data processing devices to generate an apparatus for implementing functions specified in one or more processes of a flowchart and/or one or more blocks of the block diagram.

These computer program instructions can also be stored in a computer readable memory that can guide a computer or other programmable data processing device to work in a specific way, causing the instructions stored in the computer readable memory to generate a manufacturing product including instruction apparatus, where the instruction apparatus implements functions specified in one or more processes of a flowchart and/or one or more blocks of the block diagram.

These computer program instructions can also be loaded onto a computer or other programmable data processing devices to perform a series of operational steps on the computer or other programmable devices to generate computer-implemented processing. Thus, the instructions executed on the computer or the other programmable devices provide steps for implementing functions specified in one or more processes of a flowchart and/or one or more blocks of the block diagram.

In a typical configuration, a computing device includes a processor (CPU), an input/output interface, a network interface, and a memory.

The memory may include a nonpermanent memory, a random access memory (RAM), and/or a nonvolatile memory in a computer readable medium, such as a read-only memory (ROM) or a flash memory (flash RAM). The memory is an example of the computer readable medium.

The computer readable medium includes permanent and nonpermanent, as well as movable and non-movable media, and information storage can be achieved by any method or technology. Information can be computer-readable instructions, a data structure, a program module, or other data. Examples of storage media of computers include, but are not limited to, a phase change memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a read-only optical disk read-only memory (CD-ROM), a digital versatile disc (DVD) or other optical storage, magnetic cassette tapes, magnetic tape disk storage, or other magnetic storage devices, or any other non-transmission medium, which can be used to store information that can be accessed by computing devices. According to the definition herein, a computer-readable medium does not include temporary computer-readable media (transitory media), such as a modulated data signal and a carrier.

It should also be noted that the terms "including", "comprising", or any other variation thereof are intended to cover nonexclusive inclusion, so that a process, a method, a commodity, or a device that includes a series of elements include not only those elements, but also other elements that are not explicitly listed, or also include elements inherent in the process, the method, the commodity, or the device. Without further limitations, the elements limited by the statement "including one..." do not exclude the existence of other identical elements in the process, the method, the commodity, or the device that includes the elements.

Those skilled in the art should understand that embodiments of the present application can be provided as methods, systems, or computer program products. Therefore, the present application may take the form of complete hardware embodiments, complete software embodiments, or embodiments combining software and hardware. Moreover, the present application may take the form of a computer program product implemented on a computer available storage medium (including but not limited to a disk storage, a CD-ROM, an optical storage, etc.) including a computer available program code.

The present application can be described in the general context of the computer executable instructions executed by the computer, such as program modules. Generally, program modules include routines, programs, objects, components, data structures, etc. that perform specific tasks or implement specific abstract data types. The present application can also be practiced in a distributed computing environment where tasks are executed by remote processing devices connected through communication networks. In a distributed computing environment, program modules can be located on local and remote computer storage media including storage devices.

The various embodiments of the present application are described in a progressive manner, and for same or similar parts of the embodiments, reference can be made to each other. Each embodiment focuses on the differences from other embodiments. Especially for system embodiments, since they are basically similar to method embodiments, the description is relatively simple. Please refer to the partial description of the method embodiments for relevant details.

The above are merely embodiments of the present application and are not intended to limit the present application. For those skilled in the art, there may be various changes and variations for the present application. Any modifications, equivalent substitutions, improvements, etc. made within the spirit and the principles of the present application shall be included within the scope of the claims of the present application.

## Claims

1. A user question labeling method, applied to a backend server of a manual customer service system, comprising:
obtaining a target raised question submitted to the manual customer service system and a target quick response statement corresponding to the target raised question, wherein the target quick response statement comprises: at least one quick response statement in a preset quick statement set, and the quick response statement is a response statement preset in the manual customer service system for quick response to a user question;
determining a target intention label corresponding to the target quick response statement based on a preset first correspondence, wherein the first correspondence comprises a correspondence between the target quick response statement and the target intention label pre-stored in the manual customer service system;
labeling the target raised question and generating a user intention recognition sample set based on the target intention label, wherein the user intention recognition sample set is used to train a user intention recognition model used by an intelligent customer service system, and the user intention recognition model is used to perform intention recognition on a user-raised question received by the intelligent customer service system and output a corresponding user intention recognition result.

2. The method according to claim 1, wherein the obtaining the target raised question submitted to the manual customer service system and the target quick response statement corresponding to the target raised question comprises:
obtaining a dialogue data set generated by the manual customer service system within a preset time period;
extracting multiple target raised questions and target quick response statements corresponding to the target raised questions from the dialogue data set;
after the labeling the target raised question and generating the user intention recognition sample set based on the target intention label, the method further comprises:
transferring the user intention recognition sample set to the intelligent customer service system to enable the intelligent customer service system to store the user intention recognition sample set in a first database, wherein the first database is used to store a training sample set of the user intention recognition model.

3. The method according to claim 2, wherein the obtaining the dialogue data set generated by the manual customer service system within the preset time period comprises:
storing the user-raised question submitted to the manual customer service system in a second database of the manual customer service system;
storing the quick response statement of a target agent client to the user-raised question in the second database;
based on a second correspondence between the user-raised question and the quick response statement, obtaining the dialogue data set generated by the manual customer service system within the preset time period from the second database.

4. The method according to any one of claims 1-3, wherein before the obtaining the target raised question submitted to the manual customer service system, the method further comprises:
receiving a first quick response statement uploaded by a first agent client;
receiving a first intention label corresponding to the first quick response statement uploaded by the first agent client;
storing a correspondence between the first quick response statement and the first intention label.

5. The method according to claim 4, wherein the receiving the first intention label corresponding to the first quick response statement uploaded by the first agent client comprises:
determining at least one candidate intention label corresponding to the first quick response statement;
receiving the first intention label uploaded by the first agent client, wherein the first intention label is a user intention label of the at least one candidate intention label.

6. The method according to claim 4 or 5, wherein the quick statement set comprises: a personal quick statement set and a shared quick statement set;
the storing the correspondence between the first quick response statement and the first intention label comprises:
adding the first quick response statement to the personal quick statement set corresponding to the first agent client, and storing the correspondence between the first quick response statement and the first intention label.

7. The method according to claim 6, wherein after the adding the first quick response statement to the personal quick statement set corresponding to the first agent client, the method further comprises:
receiving a shared quick statement setting request sent by the first agent client, wherein the shared quick statement setting request comprises the first quick response statement;
updating the shared quick statement set based on the first quick response statement and the first intention label.

8. The method according to claim 7, wherein the updating the shared quick statement set based on the first quick response statement and the first intention label comprises:
determining whether a second quick response statement that matches the first quick response statement exists in the shared quick statement set;
if not, adding the first quick response statement to the shared quick statement set;
determining a true intention label of the first quick response statement based on the first intention label, wherein the true intention label is determined based on a scoring result for the first intention label uploaded by a second agent client;
storing a correspondence between the first quick response statement and the true intention label in the shared quick statement set.

9. The method according to claim 8, wherein after the determining whether the second quick response statement that matches the first quick response statement exists in the shared quick statement set, the method further comprises:
if existing, determining whether similarity between the first intention label and a second intention label corresponding to the second quick response statement is greater than a preset threshold;
if yes, sending first feedback information to the first agent client, wherein the first feedback information indicates that the shared quick statement set already contains the first quick response statement;
if not, sending second feedback information to the first agent client, wherein the second feedback information comprises the recommended second intention label.

10. The method according to any one of claims 6-9, wherein before the determining the target intention label corresponding to the target quick response statement based on the preset first correspondence, the method further comprises:
if the target quick response statement belongs to the personal quick statement set, retrieving the first correspondence from the personal quick statement set;
if the target quick response statement belongs to the shared quick statement set, retrieving the first correspondence from the shared quick statement set.

11. The method according to any one of claims 1-10, wherein after the labeling the target raised question and generating the user intention recognition sample set based on the target intention label, the method further comprises:
training the user intention recognition model based on the user intention recognition sample set by using a machine learning method, to obtain a trained user intention recognition model;
performing intention recognition on the user-raised question received by the intelligent customer service system by using the user intention recognition model, and outputting the corresponding user intention recognition result.

12. A user question labeling apparatus, comprising:
a first acquisition module, configured to obtain a target raised question submitted to a manual customer service system and a target quick response statement corresponding to the target raised question, wherein the target quick response statement comprises: at least one quick response statement in a preset quick statement set, and the quick response statement is a response statement preset in the manual customer service system for quick response to a user question;
a first determination module, configured to determine a target intention label corresponding to the target quick response statement based on a preset first correspondence, wherein the first correspondence comprises a correspondence between the target quick response statement and the target intention label pre-stored in the manual customer service system;
a first generation module, configured to label the target raised question and generate a user intention recognition sample set based on the target intention label, wherein the user intention recognition sample set is used to train a user intention recognition model used by an intelligent customer service system, and the user intention recognition model is used to perform intention recognition on a user-raised question received by the intelligent customer service system and output a corresponding user intention recognition result.

13. A user question labeling device, comprising:
a processor; and
a memory arranged to store computer executable instructions, wherein the executable instructions are configured to be executed by the processor, and when executed by the processor, the executable instructions are configured to implement steps in the method according to any one of claims 1-11.

14. A storage medium, configured to store computer executable instructions which enable a computer to execute the method according to any one of claims 1-11.
